# EUROPEAN PATENT APPLICATION

(11) **EP 4 521 148 A1**
(43) Date of publication of application: **12.03.2025**
(21) Application number: 23806496.8
(22) Date of filing: 05.01.2023
(51) Int. Cl.: G02B 6/293, G02B 6/35, G02B 6/42, H04Q 11/00, G01D 21/02

(54) **OPTICAL COMMUNICATION DEVICE**

(30) Priority: 20.05.2022 CN 202210552426
(71) Applicant: Huawei Technologies Co., Ltd., Shenzhen, Guangdong 518129 (CN)
(72) Inventor: QUAN, Mingran, Shenzhen, Guangdong 518129 (CN); XIAO, Xinhua, Shenzhen, Guangdong 518129 (CN); ZHAO, Junying, Shenzhen, Guangdong 518129 (CN); JIA, Wei, Shenzhen, Guangdong 518129 (CN); LIU, Heliang, Shenzhen, Guangdong 518129 (CN); XIA, Mengrou, Shenzhen, Guangdong 518129 (CN); PENG, Yi, Shenzhen, Guangdong 518129 (CN)
(74) Representative: Maiwald GmbH
(86) International application number: PCT/CN2023/070782
(87) International publication number: WO 2023/221534

(57) **Abstract**

Embodiments of this application provide an optical communication device, including a dispersion unit and a switching unit that are disposed in a cavity of a closed housing. The dispersion unit and the switching unit can implement distribution of an optical wavelength signal. The optical communication device further includes a monitoring unit and a drive unit. The monitoring unit may monitor in real time offsets of light spots formed on the switching unit. The drive unit can drive the switching unit based on a variation obtained by the monitoring unit, so that the switching unit compensates for the offsets of the light spots. In addition, the optical communication device may further include a dust-proof and water-proof unit and a humidity control unit, to reduce or avoid impact of an environment change on performance of the optical communication device. This significantly lowers a requirement for sealing performance at an interface of the optical communication device, and reduces packaging and manufacturing costs.

## Description

This application claims priority to Chinese Patent Application No. 202210552426.2, filed with the China National Intellectual Property Administration on May 20, 2022 and entitled "OPTICAL COMMUNICATION DEVICE", which is incorporated herein by reference in its entirety.

### TECHNICAL FIELD

This application relates to the field of optical communication technologies, and in particular, to an optical communication device.

### BACKGROUND

An optical communication technology is a communication manner of using an optical wave as a transmission medium. An optical communication device is a communication device that transmits information over an optical wave, and is a device commonly used in the optical communication technology. An optical wavelength selective switch is used as an example. The optical wavelength selective switch is a core component for implementing wavelength grooming for an optical network in a transmission system.

The optical wavelength selective switch can implement wavelength grooming, to remotely and dynamically implement wavelength distribution. Specifically, the optical wavelength selective switch includes a housing and a housing cover. The housing and the housing cover jointly form a sealed cavity. A dispersion unit and an optical switching unit may be disposed in the sealed cavity. An electrical interface and an optical interface may be disposed on the housing. The optical interface includes an input port and a plurality of output ports. An optical signal may be input to the optical wavelength selective switch through the input port. The electrical interface may be connected to the optical switching unit, to implement driving and control on the switching unit. Usually, the optical signal input from the input port is multiplexed light, including light sub-beams of a plurality of wavelengths. The multiplexed light is dispersed into the plurality of light sub-beams by using the dispersion unit. The plurality of light sub-beams are transmitted to different areas of the optical switching unit, to form light spots on the optical switching unit. The optical switching unit may deflect the plurality of light sub-beams, and separate at least one of the plurality of light sub-beams from other light beams, so that the light sub-beams are output from different output ports, thereby implementing wavelength grooming and distribution of the optical signal. The switching unit is mostly a liquid crystal on silicon chip, a digital light processor, or the like, and is easily affected by an environment. As a result, accuracy is reduced, and performance of the optical wavelength selective switch is reduced. Therefore, a requirement for sealing performance of the sealed cavity is high. Usually, the optical wavelength selective switch uses an airtight packaging manner. For example, a manner such as laser beam welding, parallel seam welding, glass welding, or solder filling needs to be used at a joint of the optical interface, a joint of the electrical interface, and a joint between the housing and the housing cover, so that the optical wavelength selective switch is airtight packaged. This has a high requirement for sealing performance.

However, an airtight packaging manner of the optical wavelength selective switch has an excessively

### SUMMARY

This application provides an optical communication device, to resolve the following problem: An existing optical communication device such as an optical wavelength selective switch uses an airtight packaging manner and has a high requirement for sealing performance, causing high sealing costs and increasing manufacturing costs of the optical communication device.

This application provides an optical communication device, including: a closed housing having a cavity, and a dispersion unit and a switching unit that are disposed in the cavity. An optical interface is disposed on the closed housing. The optical interface includes an input port and a plurality of output ports. The input port is configured to enable an optical signal to be input to the cavity. The optical signal includes light sub-beams of a plurality of wavelengths.

The dispersion unit is configured to: disperse the optical signal into the plurality of light sub-beams on a dispersion plane, and transmit the light sub-beams to different partitions of the switching unit to form the light spots on the corresponding partitions. The switching unit is configured to: deflect each of the plurality of light sub-beams on a switching plane according to a preset angle, and transmit the deflected light sub-beam to the corresponding output port. The output port outputs the deflected light sub-beam. The dispersion unit can disperse a light beam on the dispersion plane, disperse an optical signal passing through the dispersion unit into a plurality of light sub-beams, and transmit the dispersed light sub-beams to the switching unit. The switching unit has different partitions corresponding to different wavelengths. Light sub-beams of different wavelengths each may be transmitted to a corresponding partition of the switching unit, and form a light spot in the corresponding partition. The switching unit can deflect a light beam. In this way, the plurality of light sub-beams transmitted to the switching unit each are deflected on the switching plane according to a preset angle. The switching unit may adjust and control different areas, that is, independently control light sub-beams of different wavelengths, so that deflection angles of the light sub-beams can be controlled. According to different deflection angles of the light sub-beams, the deflected light sub-beams formed by deflecting the light sub-beams are correspondingly transmitted to different output ports, thereby implementing wavelength grooming and distribution of the optical signal.

The optical communication device further includes a monitoring unit and a drive unit located outside the closed housing. The monitoring unit is configured to monitor offsets of the light spots on the switching unit. The offsets of the light spots mean that the light spots formed by the light sub-beams of various wavelengths are shifted from the partitions corresponding to the light sub-beams of various wavelengths. The monitoring unit can directly or indirectly monitor statuses of the offsets of the light spots on the switching unit, that is, can monitor a frequency offset phenomenon of an optical wavelength. For example, an environment change in the cavity affects a refractive index and the like in the cavity, thereby causing a frequency offset phenomenon of an optical wavelength and causing bandwidth degradation of the optical communication device. The monitoring unit may monitor a change of an environment (for example, atmospheric pressure, humidity, and temperature) in the cavity, to indirectly obtain the statuses of the offsets of the light spots. The monitoring unit is connected to the drive unit. The monitoring unit may transmit a detected variation to the drive unit.

The drive unit is connected to the switching unit. The drive unit is configured to drive the switching unit to compensate for the offsets of the light spots, to ensure accuracy of the switching unit, thereby ensuring filter passband performance of the optical communication device. In this way, performance of the optical communication device is not affected even if the optical communication device is affected by an environment and a frequency offset phenomenon of an optical wavelength occurs. In other words, impact of the environment change on the performance of the optical communication device is reduced or avoided, so that the sealing performance of the optical communication device does not need to reach an airtight level. A requirement for the sealing performance of the optical communication device is significantly lowered. For example, a requirement for sealing performance of a joint of the closed housing, the closed housing and the optical interface, the closed housing and the electrical interface, and the like is low, provided that closed and fixed assembly can be implemented in a bonding manner, a welding manner, or the like. The entire optical communication device may be in an open form or a semi-open form. This greatly reduces sealing costs, and reduces manufacturing costs of the optical communication device.

In a possible implementation, the drive unit is configured to drive the switching unit to perform redivision to obtain the partitions, to compensate for the offsets of the light spots. The light sub-beams obtained through dispersion performed by the dispersion unit are separately transmitted to the partitions of the switching unit. The light sub-beams of various wavelengths correspond to different partitions. When the frequency offset phenomenon occurs for the optical wavelengths, the light spots are shifted, that is, the light spots formed by the light sub-beams of various wavelengths are shifted from the corresponding partitions. However, the drive unit can drive the switching unit to perform redivision to obtain partitions, so that the light spots can correspond to the partitions again, to compensate for the offsets of the light spots, thereby ensuring performance of the optical communication device.

In a possible implementation, an electrical interface is further disposed on the closed housing. The drive unit is disposed outside the closed housing, and the monitoring unit is disposed in the cavity. The monitoring unit is electrically connected to the drive unit through the electrical interface, to implement signal transmission between the monitoring unit and the drive unit. The drive unit is electrically connected to the switching unit through the electrical interface, so that the drive unit drives the switching unit to compensate for the offsets of the light spots. This helps improve integration of the optical communication device. The closed housing can protect the monitoring unit, thereby improving reliability of the optical communication device.

In a possible implementation, the monitoring unit includes at least one of an atmospheric pressure measurer, a temperature measurer, and a humidity measurer.

In a possible implementation, the monitoring unit is disposed outside the closed housing.

The optical communication device further includes a photoreactor. The photoreactor is configured to emit detection light, and the photoreactor is connected to the optical interface, so that the detection light sequentially penetrates through the optical interface, the dispersion unit, and the switching unit, and then is output from the optical interface and transmitted to the monitoring unit. When the environment in the cavity changes, optical information such as a wavelength, a frequency, and a refractive index of the returned detection light changes, and the offsets of the light spots are monitored based on these variations.

In a possible implementation, the monitoring unit includes at least one of a wavelength monitoring element, an optical waveguide element, and an optical gas absorption pool.

In a possible implementation, the optical communication device further includes a humidity control unit. The humidity control unit is disposed in the cavity. The humidity control unit can adjust and control humidity in the cavity, thereby reducing a humidity change in the cavity and reducing the frequency offset phenomenon of the optical wavelength due to the humidity change. This helps further improve the performance of the optical communication device and further reduce power consumption.

In a possible implementation, the optical communication device further includes a heat insulation unit. The heat insulation unit covers the closed housing. A gas gap exists between the heat insulation unit and the closed housing. The optical interface and the electrical interface separately penetrate into the heat insulation unit. The heat insulation unit can implement heat insulation for the closed housing, so that temperatures of the closed housing and the cavity of the closed housing do not drop rapidly. This is conducive to normal running of the switching unit. In addition, the heat insulation unit can maintain a stable temperature in the cavity, which helps reduce power consumption.

In a possible implementation, the heat insulation unit has a first vent structure, the closed housing has a second vent structure, and the first vent structure, the second vent structure, and the cavity communicate. In this way, atmospheric pressure of the cavity in the closed housing is consistent with atmospheric pressure outside the closed housing. In other words, balance is implemented between the atmospheric pressure in the closed housing and the atmospheric pressure outside the closed housing. Therefore, a problem that the closed housing is deformed due to a difference between the atmospheric pressure in the closed housing and the atmospheric pressure outside the closed housing can be avoided, thereby improving reliability of the optical communication device. In addition, an environment change in the cavity due to deformation can be avoided, and stress impact caused by the deformation on the switching unit and the like can be avoided, thereby further reducing or avoiding a phenomenon of degradation of an index such as an insertion loss caused due to the deformation. In addition, a support structure for supporting the switching unit and the like may be not disposed in the cavity, which helps simplify a structure of the optical communication device and further reduce costs of the optical communication device.

In a possible implementation, the optical communication device further includes a dust-proof and water-proof unit. The dust-proof and water-proof unit penetrates into the heat insulation unit and the closed housing. The first vent structure and the second vent structure are formed on the dust-proof and water-proof unit. The dust-proof and water-proof unit has dust-proof and water-proof functions; and can implement good dust-proof and water-proof effect for the cavity, reduce entrance of particles, dust, liquid, and the like into the cavity, and avoid problems, for example, blocking the dispersion unit, the switching unit, and the like by particles, water drops, and the like, thereby ensuring running reliability of the optical communication device. In addition, based on the dust-proof and water-proof effect, the environment change in the cavity can be further reduced, and occurrence of a wavelength frequency offset phenomenon can be further avoided. This helps improve the performance of the optical communication device and reduce power consumption.

In a possible implementation, the dust-proof and water-proof unit includes a dust-proof module, a ventilation pipe, and a water-proof module. The first vent structure is formed on one of the dust-proof module and the water-proof module, and the second vent structure is formed on the other one of the dust-proof module and the water-proof module. The ventilation pipe is located between the dust-proof module and the water-proof module. The first vent structure communicates with the second vent structure through the ventilation pipe. In this way, the first vent structure, the second vent structure, and the cavity communicate. The dust-proof module can implement dust-proof effect for the cavity, and reduce or avoid entrance of particles, dust, and the like into the cavity. The water-proof module can implement water-proof effect for the cavity, and reduce or avoid entrance of liquid into the cavity. This is easy to implement.

In a possible implementation, the dust-proof module penetrates into one of the heat insulation unit and the closed housing, the water-proof module penetrates into the other one of the heat insulation unit and the closed housing, and the ventilation pipe is located in the gas gap. It is convenient to form the heat insulation unit and the closed housing. This helps improve practicability of the optical communication device.

In a possible implementation, the dust-proof and water-proof unit includes a dust-proof module, a ventilation pipe, and a water-proof module. The ventilation pipe is located in the gas gap. The dust-proof module is located in the ventilation pipe. A third vent structure communicating with the ventilation pipe is formed on the dust-proof module.

A first end of the ventilation pipe communicates with the water-proof module, and a second end of the ventilation pipe may extend to a side surface of the heat insulation unit, to form a vent structure on the heat insulation unit. The first vent structure is formed on one of the water-proof module and the second end of the ventilation pipe, and the second vent structure is formed on the other one of the water-proof module and the second end of the ventilation pipe. In this way, the cavity communicates with the outside through the first vent structure, the ventilation pipe, and the second vent structure. In addition, both the ventilation pipe and the dust-proof module can implement a good dust-proof function, which helps further improve dust-proof effect for the cavity.

In a possible implementation, a projection of the dust-proof module on the closed housing coincides with a projection of the water-proof module on the closed housing. In this way, the dust-proof module and the water-proof module are disposed at close locations, and a length of the ventilation pipe between the dust-proof module and the water-proof module may be short. This is easy to implement and has a simple structure.

In a possible implementation, a projection of the dust-proof module on the closed housing is staggered from a projection of the water-proof module on the closed housing. In this way, the dust-proof module and the water-proof module are disposed at distant locations, and a length of the ventilation pipe between the dust-proof module and the water-proof module may be long. This helps improve dust-proof effect and can further reduce entrance of particles, dust, and the like into the cavity.

In a possible implementation, the dispersion unit and the switching unit are disposed on a bottom wall of the closed housing. No support structure needs to be disposed. This further simplifies a structure of the wavelength selective switch.

In a possible implementation, the optical communication device further includes a support unit. The support unit is disposed in the cavity. The dispersion unit and the switching unit are disposed on the support unit. The support unit supports and protects the dispersion unit, the switching unit, and the like, and can implement stress buffer effect, to reduce or avoid impact from deformation of the closed housing, the heat insulation unit, or the like on the switching unit and the like.

In a possible implementation, the heat insulation unit is located outside the closed housing, or the heat insulation unit is located in the cavity.

In a possible implementation, the optical interface includes a plurality of connection optical fibers. The closed housing has a first installation position. The connection optical fibers penetrate through the first installation position. The connection optical fibers may directly penetrate through the first installation position. This can effectively reduce packaging costs at the optical interface and facilitate assembly.

In a possible implementation, the optical communication device further includes a sealing sleeve. The sealing sleeve is sleeved along a circumferential direction of the connection optical fibers. The sealing sleeve penetrates through the first installation position. This helps enhance connection strength between the closed housing and the connection optical fibers, improve reliability of the optical interface, and facilitate assembly of the connection optical fibers.

In a possible implementation, the optical communication device further includes an insertion assembly. The insertive connection assembly includes a mounting part, a first insertion part, and a second insertion part. The mounting part penetrates through the first installation position. The first insertion part and the second insertion part are removably disposed in the mounting part. To be specific, the first insertion part and the second insertion part may be inserted into the mounting part, and the first insertion part and the second insertion part may also be removed from the mounting part.

The connection optical fibers include a first part and a second part. The first insertion part is disposed on an end part of one end of the first part. In other words, the first part of the connection optical fibers is removably disposed in the mounting part by using the first insertion part, that is, detachably disposed on the closed housing. The second insertion part is disposed on an end part of one end of the second part. The second part of the connection optical fibers is removably disposed in the mounting part by using the second insertion part, that is, detachably disposed on the closed housing. In addition, the first insertion part can cooperate with the second insertion part in an insertive connection manner, so that the first part and the second part are electrically connected through the cooperation between the first insertion part and the second insertion part, thereby implementing assembly of the connection optical fibers on the closed housing.

Because the first part and the second part of the connection optical fibers are detachably disposed on the closed housing, the first part and the second part can be disassembled and replaced, and therefore, the connection optical fibers can also be disassembled and replaced. When the connection optical fiber is damaged or the like and needs to be replaced, the entire optical communication device does not need to be replaced, and only the first part and the second part of the connection optical fibers need to be removed from the mounting part. This helps reduce maintenance and replacement costs. In addition, the damaged connection optical fiber may be alternatively replaced separately during assembly, to reduce an overall scrap rate of the optical communication device and help improve a yield rate of the optical communication device.

In addition, when a type of the connection optical fibers needs to be changed, for example, changed to connection optical fibers with a larger or smaller quantity of fiber cores, only the first insertion part and the second insertion part need to be replaced, to replace the connection optical fibers. This helps improve adaptability of the optical communication device.

In a possible implementation, the electrical interface includes a flexible circuit board, the closed housing has a second installation position, and the flexible circuit board penetrates through the second installation position. This is easy to assemble. In addition, packaging costs at the electrical interface can be reduced.

In a possible implementation, the electrical interface includes a first flexible circuit board and a second flexible circuit board. The first flexible circuit board is located in the cavity, and the second flexible circuit board is located outside the cavity.

The electrical interface further includes an insulating part. The closed housing has a second installation position. The insulating part penetrates through the second installation position. The insulating part has a connection routing. The first flexible circuit board is disposed on the insulating part, and the first flexible circuit board is electrically connected to one end of the connection routing. The second flexible circuit board is disposed on the insulating part, and the second flexible circuit board is electrically connected to the other end of the connection routing. In this way, the first flexible circuit board is electrically connected to the second flexible circuit board, to meet an electrical connection requirement of the optical communication device and implement assembly of the electrical interface on the closed housing. This helps improve reliability of the electrical interface.

In a possible implementation, the flexible circuit board includes reinforcing boards and a flexible substrate, and the reinforcing boards are disposed on two opposite sides of the flexible substrate. The reinforcing boards can improve connection strength between the flexible circuit board and the closed housing and improve the reliability of the electrical interface.

### BRIEF DESCRIPTION OF DRAWINGS

FIG. 1 is a diagram of optical paths of an optical communication device according to an embodiment of this application;
FIG. 2 is a diagram of optical paths of another optical communication device according to an embodiment of this application;
FIG. 3 is a diagram of optical paths of still another optical communication device according to an embodiment of this application;
FIG. 4 is a diagram of a structure of an optical communication device according to an embodiment of this application;
FIG. 5 is a diagram of shifting of an optical wavelength signal according to an embodiment of this application;
FIG. 6 is a diagram of shifting of light spots according to an embodiment of this application;
FIG. 7 is a schematic flowchart of compensating for an offset of a light spot by an optical communication device according to an embodiment of this application;
FIG. 8 is a diagram of a structure of another optical communication device according to an embodiment of this application;
FIG. 9a is a diagram of a structure of optical fibers of an optical interface in an optical communication device according to an embodiment of this application;
FIG. 9b is a diagram of a structure of optical fibers of an optical interface in another optical communication device according to an embodiment of this application;
FIG. 9c is a diagram of connection optical fibers before being assembled in an optical communication device according to an embodiment of this application;
FIG. 9d is a diagram of a local structure of an optical interface in an optical communication device according to an embodiment of this application;
FIG. 10a is a diagram of connection optical fibers before being assembled in another optical communication device according to an embodiment of this application;
FIG. 10b is a diagram of a local structure of an optical interface in another optical communication device according to an embodiment of this application;
FIG. 11a is a diagram of connection optical fibers before being assembled in still another optical communication device according to an embodiment of this application;
FIG. 11b is a diagram of a local structure of an optical interface in still another optical communication device according to an embodiment of this application;
FIG. 11c is a front view of a second insertion part in still another optical communication device according to an embodiment of this application;
FIG. 11d is a front view of another second insertion part in still another optical communication device according to an embodiment of this application;
FIG. 11e is a front view of still another second insertion part in still another optical communication device according to an embodiment of this application;
FIG. 11f is a front view of yet another second insertion part in still another optical communication device according to an embodiment of this application;
FIG. 11g is a front view of yet another second insertion part in still another optical communication device according to an embodiment of this application;
FIG. 12a is a diagram of a local structure of an electrical interface according to an embodiment of this application;
FIG. 12b is a diagram of a local structure of an electrical interface in another optical communication device according to an embodiment of this application;
FIG. 12c is a diagram of a local structure of an electrical interface in still another optical communication device according to an embodiment of this application;
FIG. 13 is a diagram of a structure of still another optical communication device according to an embodiment of this application;
FIG. 14 is a diagram of a structure of yet another optical communication device according to an embodiment of this application;
FIG. 15 is a diagram of a structure of still another optical communication device according to an embodiment of this application;
FIG. 16 is a diagram of a structure of yet another optical communication device according to an embodiment of this application;
FIG. 17 is a diagram of a structure of still another optical communication device according to an embodiment of this application;
FIG. 18 is a diagram of a structure of yet another optical communication device according to an embodiment of this application; and
FIG. 19 is a diagram of a structure of still another optical communication device according to an embodiment of this application.

### Descriptions of reference numerals:

100: optical communication device; 101a: cavity; 101: closed housing;
102: dispersion unit; 103: switching unit; 104: optical interface;
105: electrical interface; 106: monitoring unit; 107: drive unit;
108: heat insulation unit; 108a: gas gap; 1081: first vent structure;
109: dust-proof and water-proof unit; 1091: dust-proof module; 1092: water-proof module;
1093: ventilation pipe; 110: humidity control unit; 111: photoreactor;
112: connection optical fiber; 113: circulator; 14: support unit;
115: optical input/output unit; 116: sealing sleeve; 117: insertive connection assembly;
117a: mounting part; 117b: first insertion part; 117c: second insertion part;
118: flexible circuit board; 118a: first flexible circuit board; 118b: second flexible circuit board;
1182: reinforcing board; 119: insulating part; 119a: connection routing.

### DESCRIPTION OF EMBODIMENTS

Terms used in embodiments of this application are only used to explain specific embodiments of this application, but are not intended to limit this application.

An embodiment of this application provides an optical communication device that is a device for implementing information transmission by using an optical wave as a carrier. Specifically, the optical communication device may implement wavelength selection, separation, grooming, distribution, and the like. For example, the communication device may be a wavelength selective switch, an optical switch, an optical filter, or an optical wavelength detector.

The following describes an optical path architecture of the optical communication device by using an example in which the optical communication device is a wavelength selective switch. The optical wavelength selective switch has a function of selecting and separating a light beam of a specific wavelength from an input wavelength for output, to implement wavelength grooming of an optical signal. The optical wavelength selective switch can remotely and dynamically implement wavelength distribution, and therefore, is widely used in an optical transport network system.

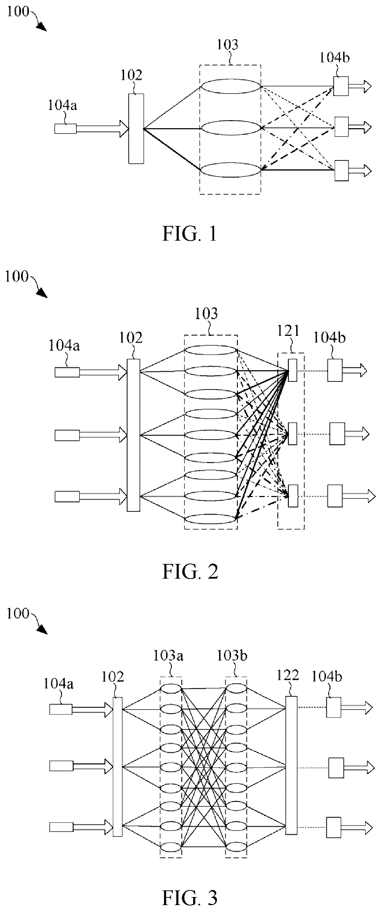

FIG. 1 is a diagram of optical paths of an optical communication device according to an embodiment of this application.

With reference to FIG. 1, the optical communication device 100 may include an input port 104a, a dispersion unit 102, a switching unit 103, and output ports 104b. There may be one input port 104a, and there may be a plurality of output ports 104b. Specifically, a quantity of output ports 104b may be consistent with a quantity of light beams obtained through selection and separation performed by the optical communication device 100.

The input port 104a and the output ports 104b may be located on a same side of the optical communication device 100, and are stacked and arrayed. A stacking direction is an x direction, and a propagation direction that is perpendicular to the x direction and parallel to an optical signal input from the input port 104a is a y direction. In this case, a plane formed by the x direction and the y direction may be a switching plane of the optical communication device 100, and a plane perpendicular to the switching plane may be a dispersion plane of the optical communication device 100.

The optical signal may be input to the optical communication device 100 through the input port 104a. The optical signal may be multiplexed light, and is formed by multiplexing a plurality of light sub-beams of different wavelengths together. The wavelengths of the light sub-beams may be commonly used wavelengths in an optical communication system. A specific quantity of wavelengths may be selected and set according to a requirement.

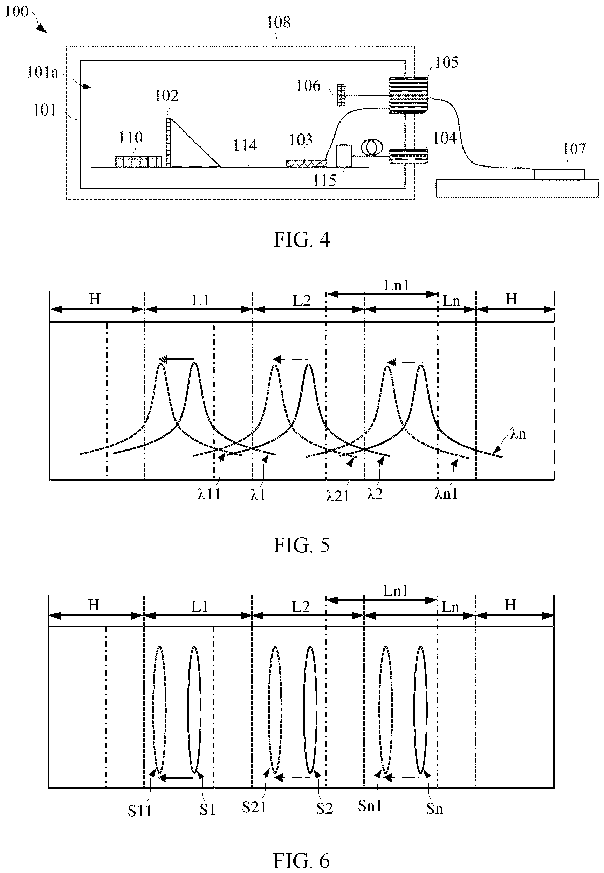

A light beam input from the input port 104a may sequentially penetrate through the dispersion unit 102 and the switching unit 103, and then be output from the output ports 104b. The dispersion unit 102 can disperse the light beam on the dispersion plane. Specifically, the optical signal input from the input port 104a is transmitted to the dispersion unit 102. The dispersion unit 102 may disperse the optical signal into the plurality of light sub-beams of different wavelengths, and transmit the dispersed light sub-beams to the switching unit 103. The switching unit 103 has different partitions to correspond to different wavelengths. The light sub-beams of the wavelengths may be separately transmitted to corresponding partitions of the switching unit 103, and form light spots in the corresponding partitions (with reference to FIG. 6). In this way, the switching unit 103 can implement independent control on light sub-beams of different wavelengths, thereby implementing separation and output of a specific wavelength signal.

The switching unit 103 can deflect a light beam. Specifically, the switching unit 103 can deflect the light sub-beams of the wavelengths on the switching plane, so that the plurality of light sub-beams transmitted to the switching unit each are deflected according to a preset angle. The switching unit 103 may adjust and control different partitions, that is, independently control light sub-beams of different wavelengths, so that deflection angles of the light sub-beams can be controlled. According to different deflection angles of the light sub-beams, the deflected light sub-beams formed by deflecting the light sub-beams are correspondingly transmitted to different output ports. For example, if a deflection angle of at least one light sub-beam of a wavelength in the plurality of light sub-beams is different from that of another light sub-beam, the deflected light sub-beam of the wavelength may be output from a corresponding output port 104b, thereby implementing separation and output of a signal of the wavelength and further implementing wavelength grooming and distribution of the optical signal.

It should be noted that a light beam obtained through separation performed by the optical communication device 100 may include a light sub-beam of one wavelength, or light sub-beams of a plurality of wavelengths. For example, light sub-beams of two wavelengths are deflected and then output from a same output port, to implement multiplexed output of the light sub-beams of the two wavelengths. A specific separation manner may be selected and set according to a requirement of a communication system.

With reference to FIG. 1, there are N output ports 104b, where N is greater than 1. After passing through the dispersion unit 102, the optical signal input from the input port 104a is divided into the plurality of light sub -beams of different wavelengths. The plurality of light sub-beams of different wavelengths may be selectively output from any one of the N output ports under deflection effect of the switching unit 103.

FIG. 2 is a diagram of optical paths of another optical communication device according to an embodiment of this application.

Alternatively, as shown in FIG. 2, there may be a plurality of input ports 104a. For example, there are M input ports 104a, where M is greater than 1. In this case, M optical signals may be input to the optical communication device 100 respectively through the corresponding M input ports 104a. Each optical signal may be selectively output from any one of the N output ports 104b after passing through the dispersion unit 102 and the switching unit 103.

As shown in FIG. 2, the optical communication device 100 may further include a port switching unit 121. The port switching unit 121 may select to switch the output port 104b, so that optical signals input from two input ports 104a cannot be both output from a same output port 104b.

FIG. 3 is a diagram of optical paths of still another optical communication device according to an embodiment of this application.

There may be a plurality of switching units on an optical path from the input port 104a to the output port 104b. For example, as shown in FIG. 3, two switching units (for example, a first switching unit 103a and a second switching unit 103b respectively) are disposed on the optical path between the dispersion unit 102 and the output port 104b, and the optical communication device 100 may further include a multiplexer unit 122 configured to multiplex light of at least two wavelengths. The M optical signals are input to the optical communication device 100 respectively from the M input ports 104a, and are output from the output ports 104b after sequentially passing through the dispersion unit 102, the first switching unit 103, the second switching unit 103, and the multiplexer unit 122.

Because the optical signals are dispersed by the dispersion unit 102 and then deflected by the two switching units 103, optical signals input from two input ports may be dispersed and then simultaneously transmitted to the multiplexer unit 122, and are multiplexed by the multiplexer unit 122 and then output from a same output port. In this way, the optical signals input from the two input ports can be output from the same output port at the same time.

The switching unit 103 may be a liquid crystal on silicon (Liquid Crystal on Silicon, LCOS for short) chip, or the switching unit 103 may be a micro-electro-mechanical system (Micro-Electro-Mechanical System, MEMS for short), or the switching unit 103 may be digital light processing (Digital Light Processing, DLP for short), or the switching unit 103 may be a liquid crystal switching chip or another chip that can implement optical path switching.

The dispersion unit 102 may be a grating, or the dispersion unit 102 may be another optical element having a wavelength dispersion function. For example, the dispersion unit 102 may be a grism, where the grism is an optical structural part including a prism and a grating.

The optical communication device usually includes a housing and a housing cover that covers the housing. The housing and the housing cover form a sealed cavity. The dispersion unit 102, the switching unit 103, and the like are disposed in the sealed cavity. The sealed cavity is filled with air as a propagation medium of a light beam. Propagation of a light beam in the air easily changes with different environments. Specifically, for example, a change of atmospheric pressure, humidity, temperature, or the like of an environment causes a change of an internal refractive index of the sealed cavity. This easily causes a frequency offset of an optical wavelength, and causes an offset of a location of a light spot formed by a light sub-beam transmitted to the switching unit 103. In other words, a light spot of each wavelength is shifted from a partition corresponding to the light spot. In this case, accuracy of deflecting each light sub-beam by the switching unit 103 is affected (for example, because a light spot is shifted from a corresponding partition, a part of the light sub-beam cannot be deflected according to a preset angle, thereby reducing a proportion of the deflected light sub-beam, that is, reducing a proportion of the output light sub-beam). As a result, filter passband performance of the optical communication device is reduced.

Therefore, a commonly used optical communication device usually uses an airtight packaging manner. For example, the housing and the housing cover of the optical wavelength selective switch are connected to form the sealed cavity, the dispersion unit and the switching unit are disposed at a cavity bottom of the sealed cavity, the electrical interface and the optical interface are provided on the housing, the electrical interface is configured to implement electrical connection control of the switching unit, and the optical interface is configured to implement input and output of an optical signal. To ensure airtightness of the sealed cavity, an airtight packaging manner is usually used at joints between the optical interface and the housing, between the electrical interface and the housing, and between the housing and the housing cover. In other words, the airtight packaging manner is used at the sealed joints, to prevent moisture, dust, and the like from entering the sealed cavity and causing a change to an environment in the sealed cavity. For example, airtight packaging is implemented for the optical interface through solder filling at an optical fiber sealing junction, and airtight packaging is usually implemented for the electrical interface through pin connector feedthrough sealing.

However, the airtight packaging manner has a high requirement for a sealing level, and sealing costs are high. This increases costs of the optical communication device. In addition, in mass manufacturing of the optical communication device, sealing is usually a final processing step, and a loss of a yield rate may occur because the sealing requirement cannot be met. As a result, a scrap rate of the entire device is increased, which further increases manufacturing costs.

In addition, the optical communication device usually works under an atmospheric pressure condition of 55 kpa to 110 kpa. Under a low atmospheric pressure condition, there is a pressure difference between the inside and the outside of the sealed housing, which easily causes a change in a shape of the housing or the housing cover. This affects reliability of the optical communication device. In addition, this may cause a change in a volume of the sealed cavity, and cause a change of a refractive index of air in the sealed cavity and the like. This may further cause a frequency offset phenomenon of an optical wavelength. In addition, the change in the shape of the housing or the housing cover may cause some stress acting on the dispersion unit, the switching unit, and the like, and therefore affecting functions of the dispersion unit, the switching unit, and the like; and may also cause the frequency offset phenomenon of the optical wavelength, and therefore affect filter passband performance of the optical communication device. Therefore, for a commonly used optical communication device such as an optical wavelength selective switch, to reduce stress impact caused by deformation on the switching unit and the like, a thick support structure is usually disposed in the housing, and the dispersion unit, the switching unit, and the like are disposed on the support structure, to achieve stress buffer effect. However, this leads to a complex structure of the optical communication device and increases costs of the optical communication device.

On this basis, an embodiment of this application provides an optical communication device. A non-airtight packaging manner is used. In addition, performance of the optical communication device is not affected, a requirement on a packaging level of the optical communication device is lowered, and manufacturing costs are significantly reduced.

The following describes a structure of the optical communication device in detail with reference to the accompanying drawings by using an example in which the optical communication device is a wavelength selective switch.

FIG. 4 is a diagram of a structure of an optical communication device according to an embodiment of this application.

With reference to FIG. 4, the optical communication device 100 includes a closed housing 101. The closed housing 101 is a support structure and a package structure of the entire optical communication device 100. A cavity 101a is provided in the closed housing 101. A dispersion unit 102 and a switching unit 103 are disposed in the cavity 101a. The closed housing 101 packages and protects the dispersion unit 102, the switching unit 103, and the like that are located in the cavity 101a.

It should be understood that the closed housing 101 of the optical communication device 100 is a closed structure and is not an airtight structure. Gas can enter the cavity 101a of the closed housing 101. In other words, material exchange may occur between the inside and the outside of the closed housing 101. A material for forming the closed housing 101 may be a material such as aluminum (Al), aluminum oxide (Al₂O₃), a Kovar alloy (Kovar), or a silicon-aluminum alloy (SiCAl).

An optical interface 104 is disposed on the closed housing 101. The optical interface 104 may include the foregoing input port 104a and output ports 104b. An optical signal formed by multiplexing a plurality of light sub-beams of different wavelengths may be input from the input port 104a to the cavity 101a. Specifically, the optical interface 104 may be a connection optical fiber. The connection optical fiber may include a plurality of fiber cores. Some fiber cores may be used to form the input port 104a, and some fiber cores may be used to form the output ports 104b. Certainly, in some other examples, the connection optical fiber may alternatively include one fiber core. In this case, the optical interface may include a plurality of connection optical fibers, some connection optical fibers are used to form the input port, and some connection optical fibers are used to form the output ports. In this embodiment of this application, description is provided by using an example in which the optical interface includes the plurality of connection optical fibers.

The optical signal is input to the cavity 101a through the input port of the optical interface 104, and is transmitted to the dispersion unit 102. The dispersion unit 102 disperses the optical signal to form a plurality of light sub-beams on the dispersion plane, and transmits the light sub-beams to different partitions of the switching unit 103 to form light spots in corresponding partitions. The switching unit 103 deflects each of the plurality of light sub-beams on a switching plane according to a preset angle, and transmits the deflected light sub-beam to the corresponding output port. The output port of the optical interface 104 outputs the deflected light sub-beam. In this way, a deflection angle of a light sub-beam of at least one wavelength is different from a deflection angle of a light sub-beam of another wavelength, so that the light sub-beam of the at least one wavelength can be output from a corresponding output port, thereby implementing separation and output of the light sub-beam of the wavelength and implementing wavelength grooming and distribution.

The optical communication device 100 further includes an optical input/output unit 115. The optical input/output unit 115 is disposed in the cavity 101a. The optical input/output unit 115 is connected to the optical interface 104. The optical input/output unit 115 can transmit the optical signal input from the optical interface 104 to the dispersion unit 102. The optical input/output unit 115 can further transmit a deflected light sub-beam from the switching unit 103 to the optical interface 104. In a process of transmitting the optical signal or the light sub-beam, the optical input/output unit 115 may control and adjust a light spot of the optical signal or the light sub-beam, for example, keep the light spot of the optical signal or the light sub-beam unchanged or enlarge or downsize the light spot of the optical signal or the light sub-beam.

Specifically, the optical input/output unit 115 may include a fiber array (Fiber Array, FA for short). The fiber array may include a plurality of optical fibers. Each optical fiber may have a pigtail. Some optical fibers form an input end of the optical input/output unit 115. These optical fibers may be connected to the input port of the optical interface 104 through pigtails. Some optical fibers form an output end of the optical input/output unit 115. These optical fibers may be connected to the output ports of the optical interface 104 through pigtails.

The optical input/output unit 115 may further include optical elements such as a collimation lens, a polarization beam splitter element, a cylindrical lens, and a plate, and can implement a function of adjusting and controlling an optical path and a light spot of an optical signal or a light sub-beam, to help improve performance of the optical communication device 100.

Still with reference to FIG. 4, the optical communication device 100 further includes a monitoring unit 106 and a drive unit 107. The monitoring unit 106 may be disposed in the closed housing 101, or the monitoring unit 106 may be disposed outside the closed housing 101. The monitoring unit 106 can directly or indirectly monitor offsets of the light spots on the switching unit 103. The offsets of the light spots mean that the light spots formed by the light sub-beams of various wavelengths are shifted from the partitions corresponding to the light sub-beams of various wavelengths. The monitoring unit 106 can monitor in real time location offset conditions of the light spots formed on the switching unit 103, in other words, can monitor a frequency offset phenomenon of an optical wavelength. For example, with reference to the foregoing content, a change of an environment in the cavity 101a affects a refractive index of air and the like, and therefore, the light spots formed on the switching unit 103 are shifted. Statuses of the offsets of the light spots can be indirectly obtained by monitoring the change of the environment (for example, atmospheric pressure, humidity, and temperature) in the cavity 101a. The monitoring unit 106 is electrically connected to the drive unit 107. The monitoring unit 106 may transmit a detected variation to the drive unit 107.

For example, the monitoring unit 106 is disposed in the closed housing 101, and the drive unit 107 may be disposed outside the closed housing 101. An electrical interface 105 is further disposed on the closed housing 101. The monitoring unit 106 may be electrically connected to the drive unit 107 through the electrical interface 105. The switching unit 103 may be electrically connected to the drive unit 107 through the electrical interface 105. In this way, the switching unit 103 is controlled by using the drive unit 107. The drive unit 107 may be a chip that can implement a processing function, a storage function, and the like. After receiving the variation transmitted by the monitoring unit 106, the drive unit 107 may drive the switching unit 103 to compensate for the offsets of the light spots.

Certainly, in some other examples, the drive unit 107 may be alternatively disposed in the closed housing 101.

FIG. 5 is a diagram of shifting of an optical wavelength signal according to an embodiment of this application. FIG. 6 is a diagram of shifting of light spots according to an embodiment of this application.

For example, as shown in FIG. 5, an optical signal is dispersed into light sub-beams of wavelengths: λ1, λ2, and λn, and then the light sub-beams are transmitted to the switching unit. The switching unit 103 has partitions L1, L2, and Ln, where λ1, λ2, and λn respectively correspond to partitions L1, L2, and Ln. With reference to FIG. 6, light spots formed by the light sub-beams of the wavelengths: λ1, λ2, and λn on the switching unit 103 are respectively S1, S2, and Sn, and the light spots S1, S2, and Sn are respectively located in the corresponding partitions L1, L2, and Ln.

It should be noted that, with reference to FIG. 5 and FIG. 6, the switching unit 103 further has frequency offset reservation areas H, and the frequency offset reservation areas H are located on two ends of the partitions of the switching unit 103, to meet offset space required when a light spot is shifted due to a frequency offset phenomenon of an optical wavelength.

When an environment in the closed housing 101 changes, for example, a change of humidity in the closed housing 101 causes a frequency offset of an optical wavelength, as shown in FIG. 5, λ11, λ21, and λn1 are light sub-beams after being shifted, and λ11, λ21, and λn1 are partially shifted to the outside of the corresponding partitions L1, L2, and Ln. Correspondingly, as shown in FIG. 6, the light spots S11, S21, and Sn1 formed by λ11, λ21, and λn1 on the switching unit 103 are also shifted to the outside of the corresponding partitions L1, L2, and Ln. This affects accuracy of deflection performed by the switching unit 103 on an optical wavelength. For example, a part of a light sub-beam cannot be deflected according to a preset angle, thereby reducing a proportion of the deflected light sub-beam, that is, reducing a proportion of the output light sub-beam. As a result, filter passband performance is reduced.

For example, the monitoring unit 106 can monitor the variation of the environment, for example, monitor a variation of humidity. The monitoring unit 106 may transmit the detected variation to the drive unit 107, and the drive unit 107 may drive the switching unit 103 to compensate for the offsets of the light spots. For example, the switching unit 103 may be driven to perform redivision to obtain partitions corresponding to the light sub-beams of the wavelengths. In other words, the switching unit 103 is driven to update the partitions or perform redivision to obtain partitions, so that the partitions correspond to the light spots again. With reference to FIG. 5 and FIG. 6, the partition Ln is used as an example. The partition Ln may be moved based on an offset of the light spot Sn1. In this case, the partitionLn1 is updated to a partition Ln1, so that the light spot Sn1 is correspondingly located in the partition Ln1 obtained after redivision. In this way, compensation is implemented for the offset of the light spot, so that the light sub-beam of the optical wavelength λn can be accurately deflected, thereby ensuring performance of the optical communication device 100.

In other words, in this embodiment of this application, the monitoring unit 106 is disposed to monitor the offsets of the light spots on the switching unit 103, to monitor a frequency offset phenomenon of an optical wavelength. In addition, the drive unit 107 drives the switching unit 103 to compensate for the offsets of the light spots, to ensure the filter passband performance of the optical communication device 100. In this way, even if the switching unit 103 and the like in the optical communication device 100 are affected by an environment and the frequency offset phenomenon of the optical wavelength occurs, the performance of the optical communication device 100 is not affected. In other words, impact of the environment change on the performance of the optical communication device 100 is reduced or avoided, so that sealing performance of the optical communication device 100 does not need to reach an airtight level. A requirement for the sealing performance of the optical communication device 100 is significantly lowered. For example, a requirement for sealing performance of a joint of the closed housing 101, the closed housing 101 and the optical interface 104, the closed housing 101 and the electrical interface 105, and the like is low, provided that closed and fixed assembly can be implemented in a bonding manner, a welding manner, or the like. The closed housing 101 may be in an open form or a semi-open form. This greatly reduces sealing costs, and reduces manufacturing costs of the optical communication device 100.

In addition, a requirement for sealing performance at a joint of the optical interface 104 and the electrical interface 105 and the like is lowered, and a problem of a high scrap rate caused when the optical interface 104 and the electrical interface 105 are finally connected and assembled can be reduced or avoided, thereby further reducing costs of the optical communication device 100.

The drive unit 107 may drive the switching unit 103 to perform redivision to obtain partitions, to compensate for the offsets of the light spots. Specifically, in a possible implementation, the drive unit 107 may store grating images loaded by the switching unit 103 under conditions of different variations in different environments. The grating image includes the partitions corresponding to the light sub-beams of the wavelengths on the switching unit 103. For example, the optical communication device 100 may perform calibration for the variations in different environments, to design a grating image that should be loaded by the switching unit 103 under a corresponding environment change condition; and store the grating image in the drive unit 107.

The monitoring module obtains the variation in the environment in the cavity 101a, and may transmit the variation to the drive unit 107. The drive unit 107 may invoke a corresponding grating image based on the variation, transmit the grating image to the switching unit 103, and drive the switching unit 103 to perform redivision based on the received grating image to obtain partitions.

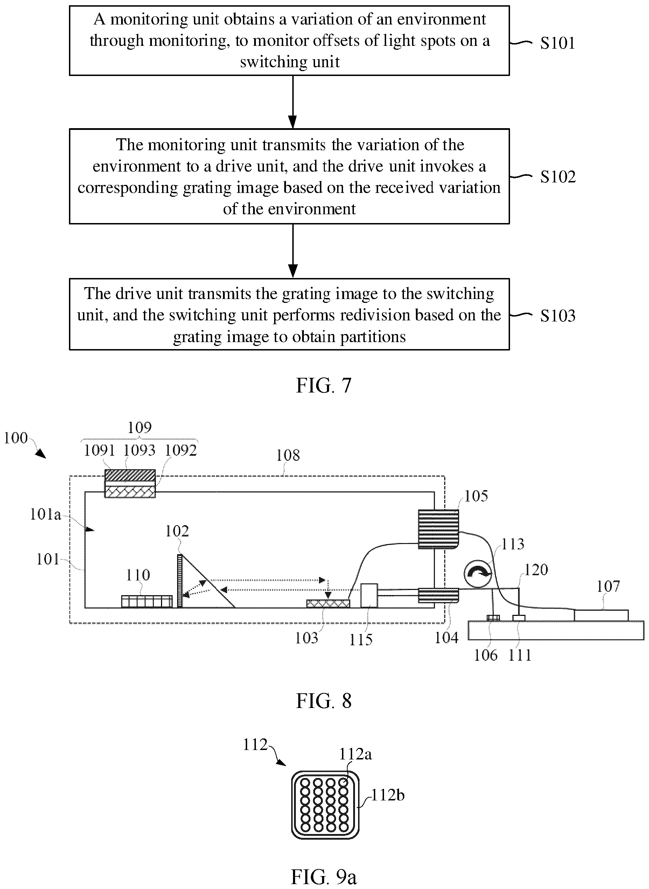

FIG. 7 is a schematic flowchart of compensating for an offset of a light spot by an optical communication device according to an embodiment of this application.

For example, during working of the optical communication device, when the light spots on the switching unit 103 are shifted due to the environment change (such as atmospheric pressure, humidity, a gas volume, and temperature) in the cavity 101a, that is, the frequency offset phenomenon of the optical wavelength occurs, with reference to FIG. 7, that the optical communication device compensates for the offset of the light spot may specifically include the following steps.

S101: The monitoring unit obtains a variation of an environment through monitoring, to monitor an offset of a light spot on the switching unit.

Specifically, the monitoring unit 106 can detect and obtain the variation of the environment, to monitor a status of the offset of the light spot. The variation may be humidity, temperature, or atmospheric pressure in the cavity 101a, or the variation may be a refractive index, a wavelength frequency, wavelength information, and the like of a known light beam that is output through the dispersion unit 102, the switching unit 103, and the like in the cavity 101a.

S102: The monitoring unit transmits the variation to the drive unit, and the drive unit invokes a corresponding grating image based on the received variation.

S103: The drive unit transmits the grating image to the switching unit, and the switching unit performs redivision based on the grating image to obtain partitions.

In this way, the drive unit 107 can update the grating image of the switching unit 103 in real time based on the variation obtained by the monitoring unit 106, that is, update a partition corresponding to each wavelength on the switching unit 103, to compensate for the offset of the light spot, thereby reducing or avoiding impact of an environment change on performance of an optical communication device. In this way, a sealing level of the optical communication device can be lowered, and costs of the optical communication device can be reduced.

The monitoring unit 106 may be disposed in the cavity 101a of the closed housing 101 (with reference to FIG. 4). The monitoring unit 106 is electrically connected to the drive unit 107 through the electrical interface 105, to implement signal transmission between the monitoring unit 106 and the drive unit 107. The monitoring unit 106 is disposed in the closed housing 101. This helps improve integration of the optical communication device 100. In addition, the closed housing 101 can protect the monitoring unit 106, thereby improving reliability of the optical communication device 100.

Specifically, the monitoring unit 106 may be some sensors or detection structures that can detect an environmental condition in the cavity 101a. For example, the monitoring unit 106 may be an atmospheric pressure measurer that can detect the atmospheric pressure of the environment in the cavity 101a in real time and monitor the offset of the light spot on the switching unit 103 based on a change of the atmospheric pressure of the environment. Alternatively, the monitoring unit 106 may be a temperature measurer, and can detect the temperature of the environment in the cavity 101a, to monitor the offset of the light spot by detecting a temperature change. Alternatively, the monitoring unit 106 may be a humidity measurer, and can detect the humidity of the environment in the cavity 101a, to monitor the offset of the light spot by detecting a humidity change.

FIG. 8 is a diagram of a structure of another optical communication device according to an embodiment of this application.

Alternatively, as shown in FIG. 8, the monitoring unit 106 may be disposed outside the closed housing 101. To monitor the offsets of the light spots on the switching unit 103 in the cavity 101a, specifically, the optical communication device 100 may further include a photoreactor 111. The photoreactor 111 may emit detection light. The detection light may be light with known data such as a wavelength, a refractive index, and a frequency. For example, the photoreactor 111 may be a laser emitter, and the detection light may be a laser. The photoreactor 111 is connected to the optical interface 104, so that the detection light can be input into the cavity 101a.

The detection light emitted from the photoreactor 111 is input from the optical interface 104 to the cavity 101a, sequentially penetrates through the dispersion unit 102 and the switching unit 103, and then is output from the optical interface 104 and transmitted to the monitoring unit 106.

The monitoring unit 106 may monitor optical information such as a wavelength, polarization, and intensity of the returned detection light. When the environment in the cavity 101a changes, the optical information such as the wavelength, the polarization, and the intensity of the returned detection light changes. In this case, the offsets of the light spots can be monitored based on these variations.

The monitoring unit 106 may transmit the optical information data of the returned detection light to the drive unit 107, so that the drive unit 107 drives, based on the data, the switching unit 103 to update the partitions.

The monitoring unit 106 may be at least one of a wavelength monitoring element, an optical waveguide element, and an optical gas absorption pool. The monitoring unit 106 monitors a variation of the optical information of the returned detection light, to detect a frequency offset phenomenon of the wavelength of the detection light. A frequency offset of the optical wavelength in the cavity is determined based on a frequency offset variation of the detection light, to monitor the offsets of the light spots.

Still with reference to FIG. 8, in a possible implementation, the optical communication device 100 may further include a transmission optical fiber 120 and a circulator 113. The photoreactor 111 and the monitoring unit 106 may be both connected to the optical interface 104 through the transmission optical fiber 120. Specifically, the photoreactor 111 and the monitoring unit 106 are both connected to one of the connection optical fibers in the optical interface 104 through the transmission optical fiber 120. The detection light emitted from the photoreactor 111 may be transmitted to the connection optical fiber in the optical interface 104 through the transmission optical fiber 120, and then input to the cavity 101a. The detection light returned from the connection optical fiber in the optical interface 104 may also be transmitted to the monitoring unit 106 through the transmission optical fiber 120.

The circulator 113 is disposed on the transmission optical fiber 120. The circulator 113 is a unidirectional circular transmission device. Specifically, the circulator 113 may be disposed between the optical interface 104 and the monitoring unit 106. The circulator 113 can enable the returned detection light to be unidirectionally transmitted from the optical interface 104 to the monitoring unit 106 through the transmission optical fiber 120. In this way, signal transmission between the photoreactor 111 and the optical interface 104 can be implemented through the transmission optical fiber 120, and signal transmission between the optical interface 104 and the monitoring unit 106 can also be implemented, thereby reducing an optical fiber on a link. This helps reduce costs.

Certainly, in another possible implementation, connections between the photoreactor 111 and the optical interface 104 and between the optical interface 104 and the monitoring unit 106 may be implemented separately through the optical fiber, thereby improving design flexibility of the optical communication device 100. For example, the optical communication device 100 may include an input optical fiber and an output optical fiber. The photoreactor 111 may be connected to the input port through the input optical fiber, so that the detection light emitted by the photoreactor 111 is input to the cavity 101a through the optical interface 104. The output port may be connected to the monitoring unit 106 through the output optical fiber, so that the returned detection light is transmitted from the optical interface 104 to the monitoring unit 106.

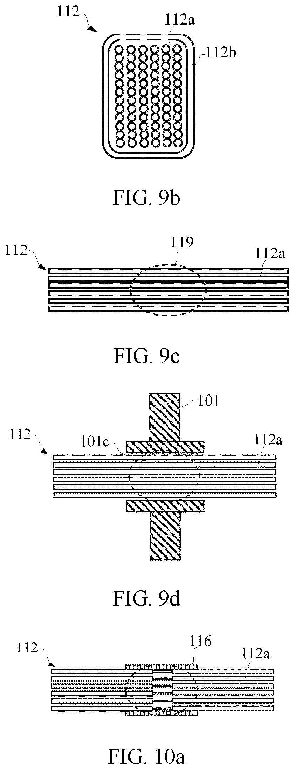

FIG. 9a is a diagram of a structure of optical fibers of an optical interface in an optical communication device according to an embodiment of this application. FIG. 9b is a diagram of a structure of optical fibers of an optical interface in another optical communication device according to an embodiment of this application.

In this embodiment of this application, the optical interface 104 may be assembled in a manner of bonding, welding, or the like. Specifically, the optical interface 104 includes connection optical fibers. The connection optical fibers are used to implement optical communication transmission between the optical communication device and another device.

For example, the connection optical fiber 112 includes a plurality of fiber cores. With reference to FIG. 9a, the connection optical fiber 112 may include a plurality of fiber cores 112a and a protective layer 112b that wraps the plurality of fiber cores 112a. A quantity of fiber cores 112a may be selected and set according to an actual transmission requirement.

The connection optical fiber 112 may be a ribbon fiber. For example, as shown in FIG. 9a, 24 fiber cores 112a may be disposed beneath the protective layer 112b of the connection optical fiber 112, and the 24 fiber cores 112a are arranged in a manner of six fiber cores in one column and are horizontally arranged in four rows, to form four six-core ribbon fibers.

Alternatively, with reference to FIG. 9b, 72 fiber cores 112a may be disposed beneath the protective layer 112b of the connection optical fiber 112, and the 72 fiber cores 112a are arranged in a manner of 12 fiber cores in one column and are horizontally arranged in six rows, to form six 12-core ribbon fibers.

Certainly, in some other examples, the connection optical fiber 112 may be alternatively another type of optical fiber, for example, a bundle fiber. Specifically, the connection optical fiber may be selected and set according to an actual transmission requirement.

FIG. 9c is a diagram of connection optical fibers before being assembled in an optical communication device according to an embodiment of this application. FIG. 9d is a diagram of a local structure of an optical interface in an optical communication device according to an embodiment of this application.

With reference to FIG. 9d, the closed housing 101 may have a first installation position 101c. For example, the first installation position 101c may be an installation through hole provided on the closed housing 101, and the connection optical fibers 112 may penetrate through the installation through hole.

In a possible implementation, the connection optical fibers 112 may directly penetrate through the first installation position 101c, to effectively reduce packaging costs at the optical interface 104. Specifically, an adhesive or solder may be disposed on the connection optical fibers 112 (for example, an adhesive 119 is disposed on the connection optical fibers 112 in FIG. 9c). Then the connection optical fibers 112 directly penetrate through the first installation position 101c, and the connection optical fibers 112 are connected to the closed housing 101 by using the adhesive. Alternatively, the connection optical fibers 112 are connected to the closed housing 101 through solder welding, to implement assembly of the optical interface 104 on the closed housing 101.

It should be understood that, in this embodiment of this application, a requirement for sealing performance in a manner such as welding or bonding at a joint of the optical interface 104 is low, provided that a closed connection and fixed assembly can be implemented between the closed housing 101 and the connection optical fibers 112. There is no need to reach an airtight level.

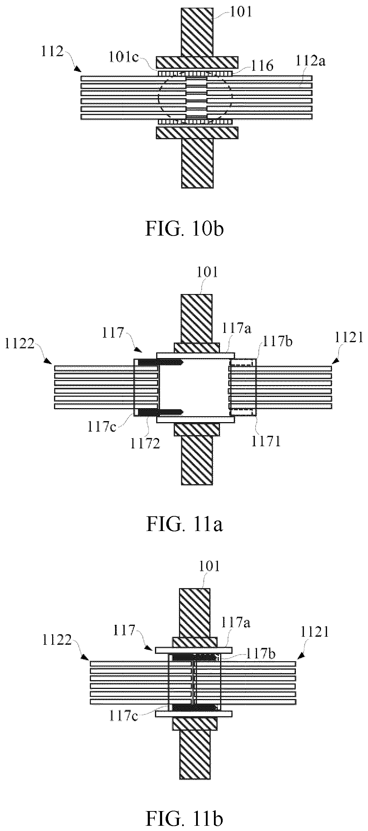

FIG. 10a is a diagram of connection optical fibers before being assembled in another optical communication device according to an embodiment of this application. FIG. 10b is a diagram of a local structure of an optical interface in another optical communication device according to an embodiment of this application.

Alternatively, in another possible implementation, with reference to FIG. 10a, the optical interface 104 may further include a sealing sleeve 116. The sealing sleeve 116 may be sleeved along a circumferential direction of the connection optical fibers 112. Specifically, the connection optical fibers 112 may be connected to the sealing sleeve 116 in a bonding or solder welding manner. In FIG. 10a, the connection optical fibers 112 are coated with an adhesive, and the sealing sleeve 116 is sleeved on the connection optical fibers 112, to implement fixed assembly of the connection optical fibers 112 and the sealing sleeve 116.

With reference to FIG. 10b, the sealing sleeve 116 may penetrate through the first installation position 101c of the closed housing 101, and the sealing sleeve 116 may also be fastened to the closed housing 101 in a manner such as bonding or solder welding, so that the connection optical fibers 112 are disposed on the closed housing 101, to implement assembly of the optical interface 104 on the closed housing 101. This helps enhance connection strength between the closed housing 101 and the connection optical fibers 112, improve reliability of the optical interface 104, and facilitate assembly of the connection optical fibers 112.

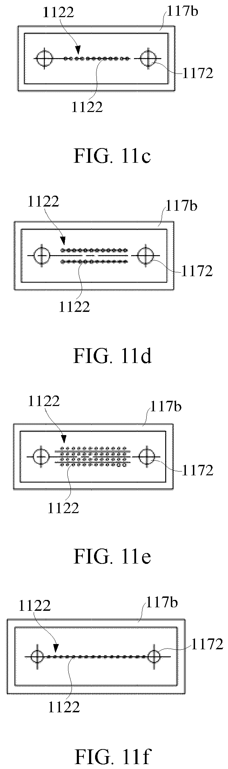

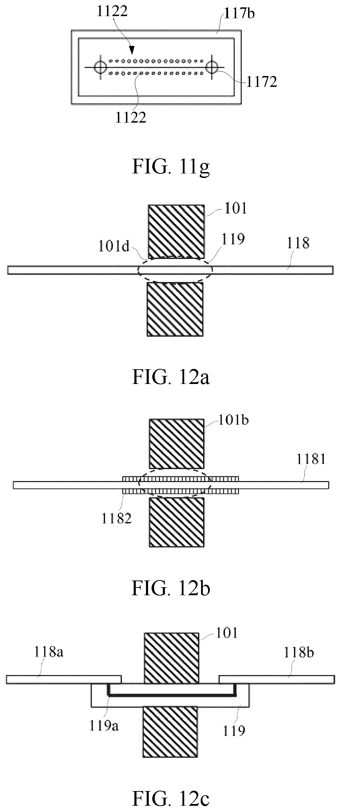

FIG. 11a is a diagram of connection optical fibers before being assembled in still another optical communication device according to an embodiment of this application. FIG. 11b is a diagram of a local structure of an optical interface in still another optical communication device according to an embodiment of this application. FIG. 11c is a front view of a second insertion part in still another optical communication device according to an embodiment of this application. FIG. 11d is a front view of another second insertion part in still another optical communication device according to an embodiment of this application. FIG. 11e is a front view of still another second insertion part in still another optical communication device according to an embodiment of this application. FIG. 11f is a front view of yet another second insertion part in still another optical communication device according to an embodiment of this application. FIG. 11g is a front view of yet another second insertion part in still another optical communication device according to an embodiment of this application.

Alternatively, in still another possible implementation, with reference to FIG. 11a, the optical interface 104 may further include an insertion assembly 117. The insertive connection assembly 117 includes a mounting part 117a, a first insertion part 117b, and a second insertion part 117c. The mounting part 117a may penetrate through the first installation position 101c. Specifically, the mounting part 117a may be fastened in the first installation position 101c in a manner such as bonding or solder welding. The first insertion part 117b and the second insertion part 117c are removably disposed in the mounting part 117a. In other words, the first insertion part 117b and the second insertion part 117c may be inserted into the mounting part 117a, and the first insertion part 117b and the second insertion part 117c may also be removed from the mounting part 117a.

The connection optical fibers 112 may include a first part 1121 and a second part 1122. The first insertion part 117b may be disposed at one end of the first part 1121. The other end of the first part 1121 may extend into the cavity 101a. In other words, the first part 1121 of the connection optical fibers 112 is removably disposed in the mounting part 117a by using the first insertion part 117b, that is, detachably disposed on the closed housing 101. The second insertion part 117c is disposed at one end of the second part 1122. The other end of the second part 1122 extends out of the closed housing 101. The second part 1122 of the connection optical fibers 112 is removably disposed in the mounting part 117a by using the second insertion part 117c, that is, detachably disposed on the closed housing 101.

The first insertion part 117b may cooperate with the second insertion part 117c in an insertive connection manner. For example, the first insertion part 117b may be a protruding clamping part, the second insertion part 117c is a clamping slot, and the clamping part can be inserted into the clamping slot. As shown in FIG. 11b, when the connection optical fibers 112 are assembled, the first insertion part 117b and the second insertion part 117c may be inserted into the mounting part 117a, and the first insertion part 117b and the second insertion part 117c cooperate in an insertive connection manner, to implement an electrical connection between the first part 1121 and the second part 1122. The first part 1121 and the second part 1122 may be alternatively disposed on the mounting part 117a by using the first insertion part 117b and the second insertion part 117c. In this way, the connection optical fibers 112 are assembled on the closed housing 101.

Because the first part 1121 and the second part 1122 of the connection optical fibers 112 are detachably disposed on the closed housing 101, the first part 1121 and the second part 1122 can be disassembled and replaced, and therefore, the connection optical fibers 112 can also be disassembled and replaced. When the connection optical fiber 112 is damaged or the like and needs to be replaced, the entire optical communication device does not need to be replaced, and only the first part 1121 and the second part 1122 of the connection optical fibers 112 need to be removed from the mounting part 117a. This helps reduce maintenance and replacement costs. In addition, the damaged connection optical fiber 112 may be alternatively replaced separately during assembly, to reduce an overall scrap rate of the optical communication device and help improve a yield rate of the optical communication device.

In addition, when a type of the connection optical fibers 112 needs to be changed, for example, changed to connection optical fibers 112 with a larger or smaller quantity of fiber cores, only the first insertion part 117b and the second insertion part 117c need to be replaced, to replace the connection optical fibers 112. This helps improve adaptability of the optical communication device.

Specifically, for example, for the first insertion part 117b, as shown in FIG. 11c, the first part 1121 of the connection optical fibers 112 is an optical fiber including 12 fiber cores, and the first insertion part 117b is sleeved on the end of the first part 1121. When the first part 1121 needs to be replaced, for example, the first part 1121 needs to be replaced with a 24-core, 48-core, 16-core, or 32-core optical fiber, the first insertion part 117b may be directly replaced. For example, for the first insertion part 117b shown in FIG. 11d, the first part 1121 is a 24-core optical fiber; for the first insertion part 117b shown in FIG. 11e, the first part 1121 is a 48-core optical fiber; for the first insertion part 117b shown in FIG. 11f, the first part 1121 is a 16-core optical fiber; and for the first insertion part 117b shown in FIG. 11g, the first part 1121 is a 32-core optical fiber.

FIG. 12a is a diagram of a local structure of an electrical interface 105 according to an embodiment of this application.

In this embodiment of this application, the electrical interface 105 may be assembled in a manner of bonding, welding, or the like.

Specifically, the electrical interface 105 may include a flexible circuit board. The flexible circuit board is configured to implement an electrical connection requirement of the optical communication device, for example, implement an electrical connection between the drive unit 107 and the switching unit 103. The flexible circuit board may also be configured to implement an electrical connection requirement between the optical communication device and another device, for example, may be configured to implement an electrical connection between the flexible circuit board and another device in a communication system.

With reference to FIG. 12a, in a possible implementation, the flexible circuit board 118 may directly penetrate into the closed housing 101. Specifically, the closed housing 101 may be provided with a second installation position 101d, the second installation position 101d may be an installation through hole, and the flexible circuit board 118 may penetrate through the second installation position 101d, to effectively reduce packaging costs of the electrical interface 105 and facilitate assembly.

Specifically, an adhesive or solder may be disposed on the flexible circuit board 118 (as shown in FIG. 12a, the flexible circuit board 118 is coated with the adhesive 119), and then the flexible circuit board 118 directly penetrates through the second installation position 101d, to implement assembly of the flexible circuit board 118, that is, implement assembly of the electrical interface 105 on the closed housing 101.

It should be understood that, a requirement for sealing performance in welding or bonding at a joint of the electrical interface 105 is also low, provided that a closed connection and fixed assembly can be implemented between the flexible circuit board 118 and the closed housing 101. There is no need to reach an airtight level.

FIG. 12b is a diagram of a local structure of an electrical interface in another optical communication device according to an embodiment of this application.

Alternatively, in another possible implementation, with reference to FIG. 12b, the flexible circuit board 118 may include a flexible substrate 1181 and reinforcing boards 1182. The reinforcing boards 1182 are disposed on two opposite sides of the flexible substrate 1181. Then the reinforcing boards 1182 and the flexible substrate 1181 jointly penetrate through the second installation position 101d, to assemble the flexible circuit board 118, so that the electrical interface 105 is assembled and disposed on the closed housing 101. The reinforcing boards 1182 can improve connection strength between the flexible circuit board 118 and the closed housing 101 and improve reliability of the electrical interface.

FIG. 12c is a diagram of a local structure of an electrical interface in still another optical communication device according to an embodiment of this application.

Alternatively, in still another possible implementation, with reference to FIG. 12c, the electrical interface may include an insulating part 119. For example, the insulating part 119 may be a ceramic through-wall part. The insulating part 119 penetrates through the second installation position 101d. To be specific, one end of the insulating part 119 extends into the cavity 101a, and the other end of the insulating part 119 extends out of the cavity 101a. The insulating part 119 has a connection routing 119a. Specifically, the insulating part 119 may be disposed on the second installation position 101d by using an adhesive or through solder welding.

The electrical interface may include a first flexible circuit board 118a and a second flexible circuit board 118b. The first flexible circuit board 118a may be located in the cavity 101a, and the second flexible circuit board 118b may be located outside the cavity 101a. One end of the first flexible circuit board 118a may be electrically connected to the switching unit 103 in the cavity 101a, and one end of the second flexible circuit board 118b may be electrically connected to the drive unit 107 outside the cavity 101a.

The other end of the first flexible circuit board 118a may be disposed on the insulating part, and the first flexible circuit board 118a is electrically connected to one end of the connection routing 119a. The other end of the second flexible circuit board 118b may also be disposed on the insulating part, and the second flexible circuit board 118b is electrically connected to the other end of the connection routing 119a. In this way, the first flexible circuit board 118a is electrically connected to the second flexible circuit board 118b, to meet an electrical connection requirement of the optical communication device and assemble the electrical interface 105 on the closed housing 101. This helps improve connection strength of the electrical interface 105 and improve reliability of the electrical interface 105.

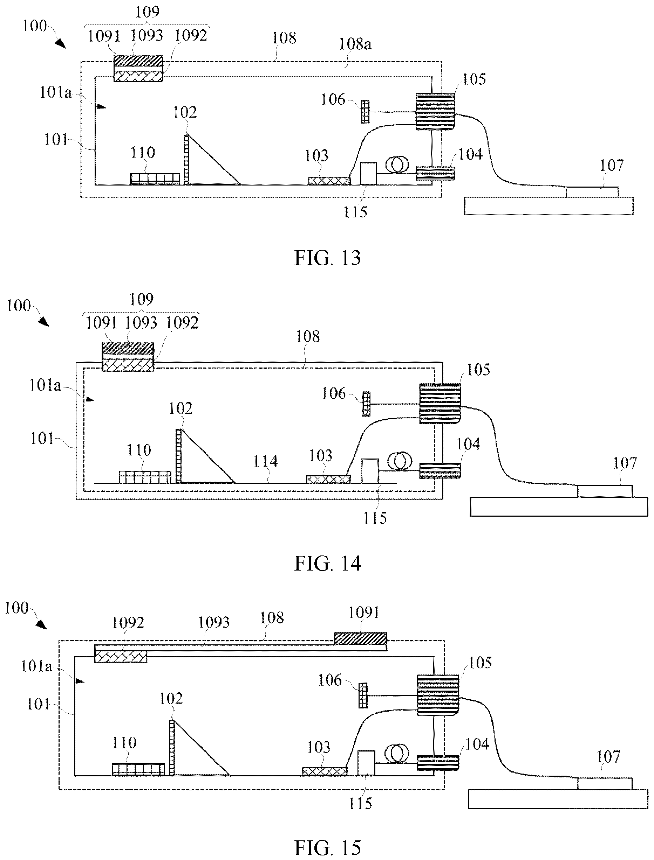

FIG. 13 is a diagram of a structure of still another optical communication device according to an embodiment of this application.

In this embodiment of this application, with reference to FIG. 13, the optical communication device 100 may further include a humidity control unit 110. The humidity control unit 110 is disposed in the cavity 101a. The humidity control unit 110 can adjust and control humidity in the cavity 101a, thereby reducing a humidity change in the cavity 101a and reducing a frequency offset phenomenon of the optical wavelength due to the humidity change. This helps further improve performance of the optical communication device 100 and further reduce power consumption.

A material for forming the humidity control unit 110 may be a desiccant, or may be another inorganic or organic material that can adjust humidity. For example, the material for forming the humidity control unit 110 may be a humidity condensation control fiber, and has bidirectional functions of moisture absorption and moisture release. One or more control fibers may be disposed in the cavity 101a.

Alternatively, the material for forming the humidity control unit 110 may be a microporous high polymer having a cyclic moisture absorption and release function, or the like. When the material for forming the control unit is the foregoing high polymer, a bearing unit (not shown in the figure) may be further disposed in the cavity 101a, the bearing unit is provided with a through hole, and the microporous high polymer may be disposed in the bearing unit. In this way, the following case can be avoided: Humidity control effect is reduced due to dropping of water absorbed by a microporous unit.

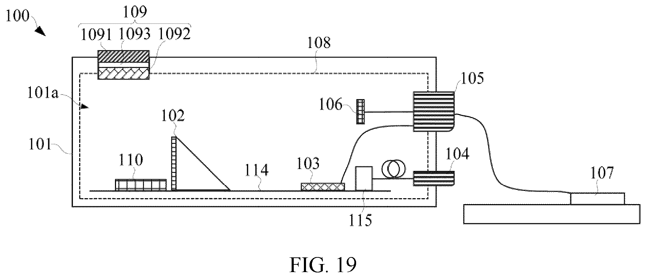

Still with reference to FIG. 13, the optical communication device 100 may further include a heat insulation unit 108, the heat insulation unit 108 covers the closed housing 101, and the electrical interface 105 and the optical interface 104 separately penetrate into the heat insulation unit 108. The heat insulation unit 108 may be disposed outside the closed housing 101, or the heat insulation unit 108 may be disposed in the closed housing 101 (with reference to FIG. 19).

It should be understood that a liquid crystal on silicon chip or the like serving as the switching unit 103 has a high requirement for temperature of a working environment, and needs to work in an environment with a relatively high temperature (for example, 50°C to 60°C). Therefore, the optical communication device may further include a heating unit (not shown in the figure). The heating unit may be disposed in the cavity 101a, and the heating unit can control the temperature in the cavity 101a of the closed housing 101, to meet a working condition requirement of the switching unit 103 and ensure accuracy of the switching unit 103.

In addition, to implement heat dissipation for the entire optical communication device 100, to reduce or avoid a security risk such as overheating of the optical communication device 100, the optical communication device 100 may further include a heat dissipation unit (not shown in the figure). The heat dissipation unit is disposed outside the closed housing 101. The heat dissipation unit may dissipate heat for the optical communication device 100, for example, dissipate heat for the drive unit 107.

The heat insulation unit 108 can implement heat insulation for the closed housing 101, so that temperatures of the closed housing 101 and the cavity 101a do not drop rapidly when the heat dissipation unit works. This is conducive to normal running of the switching unit 103. In addition, the heat insulation unit 108 can maintain a stable temperature in the cavity 101a, and can also reduce power consumption generated by the heating unit during controlling the temperature in the cavity 101a.

The material for forming the heat insulation unit 108 may be a material with a small thermal coefficient. For example, the material for forming the heat insulation unit may be polystyrene foamed plastic, aluminum oxide, or glass wool.

A gas gap 108a may be formed between the heat insulation unit 108 and the closed housing 101. The gas gap 108a may be filled with air, or the gas gap 108a may be filled with another gas, for example, some inert gases. The gas in the gas gap 108a can further implement heat insulation for the closed housing 101, to further reduce a decrease of the temperature in the closed housing 101 and ensure running of the switching unit 103, thereby further reducing power consumption.

In this embodiment of this application, because the monitoring unit 106 and the drive unit 107 are disposed, impact of an environment change on the performance of the optical communication device 100 is reduced or avoided, and the optical communication device 100 may be of an unsealed structure.

Therefore, a first vent structure may be formed on the heat insulation unit 108, a second vent structure may be formed on the closed housing 101, and the first vent structure, the second vent structure, and the cavity 101a communicate with each other. In this way, atmospheric pressure of the cavity 101a in the closed housing 101 is consistent with atmospheric pressure outside the closed housing 101. In other words, balance is implemented between the atmospheric pressure in the closed housing 101 and the atmospheric pressure outside the closed housing 101. Therefore, a problem that the closed housing 101 is deformed due to a difference between the atmospheric pressure in the closed housing 101 and the atmospheric pressure outside the closed housing 101 can be avoided, thereby improving reliability of the optical communication device 100. In addition, an environment change in the cavity 101a caused due to deformation can be avoided, and stress impact caused by the deformation on the switching unit 103 and the like can be avoided, thereby further reducing or avoiding a frequency offset phenomenon of the optical wavelength due to the deformation and improving the filter passband performance of the optical communication device 100. In addition, a support structure for supporting the switching unit 103 and the like may be not disposed in the cavity 101a, which helps simplify a structure of the optical communication device 100 and further reduce costs of the optical communication device 100.

The first vent structure and the second vent structure may be structures such as breathable through holes respectively disposed on the heat insulation unit 108 and the closed housing 101. Alternatively, still with reference to FIG. 13, the optical communication device 100 may include a dust-proof and water-proof unit 109. The dust-proof and water-proof unit 109 may penetrate into the heat insulation unit 108 and the closed housing 101. The first vent structure and the second vent structure are formed on the dust-proof and water-proof unit 109. In this way, the cavity 101a can communicate with the outside of the closed housing 101, so that atmospheric pressure of the cavity 101a can be consistent with atmospheric pressure outside the closed housing 101.

Specifically, the first vent structure and the second vent structure may be structures such as through holes formed on the dust-proof and water-proof unit 109.

The dust-proof and water-proof unit 109 has dust-proof and water-proof functions; and can implement good dust-proof and water-proof effect for the cavity 101a, reduce entrance of particles, dust, liquid, and the like into the cavity 101a, and avoid problems, for example, blocking the dispersion unit 102, the switching unit 103, and the like by particles, water drops, and the like, thereby ensuring running reliability of the optical communication device 100. In addition, based on the dust-proof and water-proof effect, the environment change in the cavity 101a can be further reduced, and occurrence of a wavelength frequency offset phenomenon can be further avoided. This helps improve the performance of the optical communication device 100 and reduce power consumption.

With reference to FIG. 13, the dust-proof and water-proof unit 109 may include a dust-proof module 1091, a water-proof module 1092, and a ventilation pipe 1093. The dust-proof module 1091 can implement dust-proof effect for the cavity 101a, and reduce or avoid entrance of particles, dust, and the like into the cavity 101a. Specifically, the dust-proof module 1091 may be one of or a combination of a dust-proof channel, a dust-proof net, a dust-proof film layer (for example, a polytetrafluoroethylene layer), or dust-proof foam.

The water-proof module 1092 can implement water-proof effect for the cavity 101a, and reduce or avoid entrance of liquid into the cavity 101a. Specifically, the water-proof module 1092 may be a water-proof film layer or the like.

In a possible implementation, the first vent structure may be formed on one of the dust-proof module 1091 and the water-proof module 1092, and the second vent structure may be formed on the other one of the dust-proof module 1091 and the water-proof module 1092. The ventilation pipe 1093 may be located between the dust-proof module 1091 and the water-proof module 1092. The first vent structure communicates with the second vent structure through the ventilation pipe 1093. In this way, the first vent structure, the second vent structure, and the cavity 101a communicate.

It should be understood that the first vent structure may be located on the dust-proof module 1091, or the first vent structure may be located on the water-proof module 1092. Correspondingly, the second vent structure may be located on the water-proof module 1092, or the second vent structure may be located on the dust-proof module 1091. In this implementation, description is provided by using an example in which the first vent structure is formed on the dust-proof module 1091 and the second vent structure is formed on the water-proof module 1092. For example, the first vent structure may be a through-hole structure formed on the dust-proof module 1091 (for example, the dust-proof module 1091 is a dust filter, and the first vent structure is a mesh on the dust filter), and the second vent structure may also be a through-hole structure formed on the water-proof module 1092 (for example, the water-proof module 1092 is a water-proof film layer, and the second vent structure is a through hole on the water-proof film layer).

The dust-proof and water-proof unit 109 penetrates into the heat insulation unit 108 and the closed housing 101. Specifically, the dust-proof module 1091 may penetrate into one of the heat insulation unit 108 and the closed housing 101, and the water-proof module 1092 may penetrate into the other one of the heat insulation unit 108 and the closed housing 101. The ventilation pipe 1093 is located in the gas gap 108a between the heat insulation unit 108 and the closed housing 101.

For example, the dust-proof module 1091 may penetrate into the closed housing 101, and the water-proof module 1092 may penetrate into the heat insulation unit 108. Alternatively, with reference to FIG. 13, the dust-proof module 1091 may penetrate into the heat insulation unit 108, the water-proof module 1092 may penetrate into the closed housing 101, the second vent structure of the water-proof module 1092 communicates with the cavity 101a, and the first vent structure of the dust-proof module 1091 communicates with the second vent structure through the ventilation pipe 1093. In this way, the cavity 101a communicates with the outside of the closed housing 101.

FIG. 14 is a diagram of a structure of yet another optical communication device according to an embodiment of this application.

Alternatively, one of the dust-proof module 1091 and the water-proof module 1092 may penetrate into the heat insulation unit 108 and the closed housing 101, provided that it is ensured that the first vent structure, the second vent structure, and the cavity 101a communicate so that the atmospheric pressure of the cavity 101a is consistent with the atmospheric pressure outside the closed housing 101. For example, as shown in FIG. 14, the water-proof module 1092 penetrates into the heat insulation unit 108 and the closed housing 101, the dust-proof module 1091 is disposed on the water-proof module 1092, and the ventilation pipe 1093 exists between the dust-proof module 1091 and the water-proof module 1092. The first vent structure of the dust-proof module 1091 communicates with the second vent structure of the water-proof module 1092 through the ventilation pipe 1093, and the second vent structure communicates with the cavity 101a, so that the cavity 101a communicates with the outside of the closed housing 101.

With reference to FIG. 13 and FIG. 14, a location of disposing the dust-proof module 1091 may correspond to a location of disposing the water-proof module 1092. In other words, a projection of the dust-proof module 1091 on the closed housing 101 may coincide with a projection of the water-proof module 1092 on the closed housing 101. In this way, the dust-proof module 1091 and the water-proof module 1092 are disposed at close locations, and a length of the ventilation pipe 1093 between the dust-proof module 1091 and the water-proof module 1092 may be short. This is easy to implement and has a simple structure.

FIG. 15 is a diagram of a structure of still another optical communication device according to an embodiment of this application.

Alternatively, with reference to FIG. 15, a location of disposing the dust-proof module 1091 may not correspond to and may be staggered from a location of disposing the water-proof module 1092. In other words, a projection of the dust-proof module 1091 on the closed housing 101 may not coincide with and may be staggered from a projection of the water-proof module 1092 on the closed housing 101. In this way, the dust-proof module 1091 and the water-proof module 1092 are disposed at distant locations, and a length of the ventilation pipe 1093 between the dust-proof module 1091 and the water-proof module 1092 may be long. This helps improve dust-proof effect and can further reduce entrance of particles, dust, and the like into the cavity 101a.

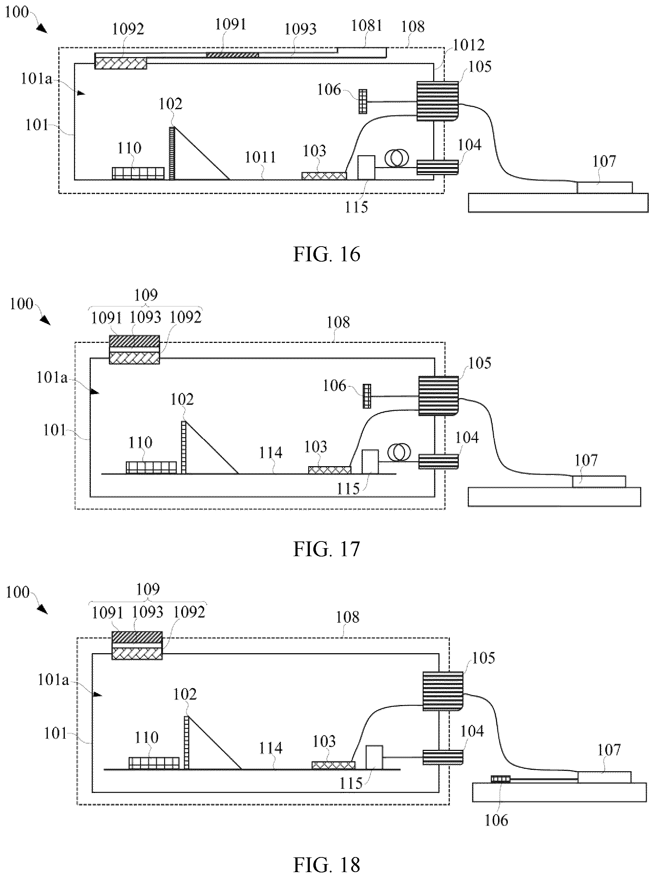

FIG. 16 is a diagram of a structure of yet another optical communication device according to an embodiment of this application.

In another possible implementation, with reference to FIG. 16, the ventilation pipe 1093 may be located in the gas gap 108a between the heat insulation unit 108 and the closed housing 101. A first end of the ventilation pipe 1093 may communicate with the water-proof module 1092. The first vent structure is formed on one of the second end of the ventilation pipe 1093 and the water-proof module 1092, and the second vent structure is formed on the other one of the second end of the ventilation pipe 1093 and the water-proof module 1092.

The first vent structure may be formed on the second end of the ventilation pipe 1093, and the second vent structure is formed on the water-proof module 1092. Alternatively, the second vent structure may be formed on the second end of the ventilation pipe 1093, and the first vent structure is formed on the water-proof module 1092. In this implementation, description is provided by using an example in which the first vent structure is formed on the water-proof module 1092 and the second vent structure is formed on the second end of the ventilation pipe 1093.

The water-proof module 1092 may be disposed on the closed housing 101. The second end of the ventilation pipe 1093 may extend to a side surface of the heat insulation unit 108, to form the first vent structure 1081 on the heat insulation unit 108.

The dust-proof module 1091 may be disposed in the ventilation pipe 1093. The dust-proof module 1091 has a third vent structure. The third vent structure communicates with the ventilation pipe 1093, to ensure that the first vent structure, the second vent structure, and the cavity 101a can communicate. Both the ventilation pipe 1093 and the dust-proof module 1091 can implement good dust-proof effect, which helps further improve dust-proof effect for the cavity 101a.

The closed housing 101 may include a bottom wall 1011 and a side wall 1012 disposed on the bottom wall 1011, and the optical interface 104 and the electrical interface 105 may be disposed on the side wall 1012. The dispersion unit 102, the switching unit 103, the humidity control unit 110, and the like all may be disposed on the closed housing 101, and specifically disposed on the bottom wall 1011 of the closed housing 101. In this case, the bottom wall 1011 implements a support function, and no support structure may be disposed, to simplify the structure of the optical communication device 100.

It should be understood that, when the dispersion unit 102 and the like are disposed on the bottom wall 1011 of the closed housing 101, the heat insulation unit 108 may be located outside the closed housing 101. Certainly, in some examples, when heat insulation performance of the closed housing 101 is good, the heat insulation unit 108 may be not disposed, to further simplify the structure of the optical communication device 100.

FIG. 17 is a diagram of a structure of still another optical communication device according to an embodiment of this application. FIG. 18 is a diagram of a structure of yet another optical communication device according to an embodiment of this application.

Certainly, in some other examples, with reference to FIG. 17, the optical communication device 100 may also include a support unit 114. The support unit 114 may be disposed in the cavity 101a. The dispersion unit 102, the switching unit 103, the humidity control unit 110, and the like all may be disposed on the support unit 114. The support unit 114 supports and protects the dispersion unit 102, the switching unit 103, and the like, and can provide stress buffer effect, to reduce or avoid impact from deformation of the closed housing 101 and the like on the switching unit 103 and the like. This helps reduce the frequency offset phenomenon of the optical wavelength and improve the filter passband performance of the optical communication device 100.

A material for forming the support unit 114 may be a material having good thermal conductivity and a low expansion coefficient, and is not prone to deformation, to support and protect the dispersion unit 102 and the switching unit 103 that are located on the support unit 114.

Still with reference to FIG. 17, the support unit 114 is disposed in the cavity 101a, and the monitoring unit 106 may be located in the cavity 101a. It should be understood that, with reference to FIG. 18, the monitoring unit 106 may be alternatively located outside the cavity 101a.

FIG. 19 is a diagram of a structure of still another optical communication device according to an embodiment of this application.

In this embodiment of this application, for example, when a material for forming the closed housing 101 is a material with good thermal conductivity, that is, when heat insulation performance of the closed housing 101 is poor, the heat insulation unit 108 may be disposed outside the closed housing 101, to effectively ensure heat insulation effect of the cavity 101a.

With reference to FIG. 19, when the material for forming the closed housing 101 is a material with poor thermal conductivity, that is, the closed housing 101 has good heat insulation performance, namely, the closed housing 101 has good heat insulation performance, the heat insulation unit 108 may be disposed in the closed housing 101. Certainly, in some other examples, when the closed housing 101 has good heat insulation performance, the heat insulation unit 108 may also be disposed outside the closed housing 101.

With reference to FIG. 19, the heat insulation unit 108 is located in the closed housing 101. When the heat insulation unit 108 is located in the cavity 101a, the support unit 114 should be located in the heat insulation unit 108, so that the heat insulation unit 108 can implement heat insulation effect for the dispersion unit 102, the switching unit 103, and the like that are located on the support unit 114.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. An optical communication device, comprising: a closed housing having a cavity, and a dispersion unit and a switching unit that are disposed in the cavity, wherein an optical interface is disposed on the closed housing, the optical interface comprises an input port and a plurality of output ports, the input port is configured to enable an optical signal to be input to the cavity, and the optical signal comprises light sub-beams of a plurality of wavelengths;
the dispersion unit is configured to: disperse the optical signal into the plurality of light sub-beams on a dispersion plane, and transmit the light sub-beams to different partitions of the switching unit to form light spots on the corresponding partitions; the switching unit is configured to: deflect each of the plurality of light sub-beams on a switching plane according to a preset angle, and transmit the deflected light sub-beam to the corresponding output port; and the output port is configured to output the deflected light sub-beam; and
the optical communication device further comprises a monitoring unit and a drive unit, the monitoring unit is configured to monitor offsets of the light spots on the switching unit, the monitoring unit is connected to the drive unit, the drive unit is connected to the switching unit, and the drive unit is configured to drive the switching unit to compensate for the offsets of the light spots.

2. The optical communication device according to claim 1, wherein the drive unit is configured to drive the switching unit to perform redivision to obtain the partitions, to compensate for the offsets of the light spots.

3. The optical communication device according to claim 1 or 2, wherein an electrical interface is further disposed on the closed housing, the drive unit is disposed outside the closed housing, the monitoring unit is disposed in the cavity, the monitoring unit is electrically connected to the drive unit through the electrical interface, and the drive unit is electrically connected to the switching unit through the electrical interface.

4. The optical communication device according to claim 3, wherein the monitoring unit comprises at least one of an atmospheric pressure measurer, a temperature measurer, and a humidity measurer.

5. The optical communication device according to claim 1 or 2, wherein the monitoring unit is disposed outside the closed housing; and
the optical communication device further comprises a photoreactor, the photoreactor is configured to emit detection light, and the photoreactor is connected to the optical interface, so that the detection light sequentially penetrates through the optical interface, the dispersion unit, and the switching unit, and then is output from the optical interface and transmitted to the monitoring unit.

6. The optical communication device according to claim 5, wherein the monitoring unit comprises at least one of a wavelength monitoring element, an optical waveguide element, and an optical gas absorption pool.

7. The optical communication device according to any one of claims 1 to 6, further comprising a humidity control unit, wherein the humidity control unit is disposed in the cavity.

8. The optical communication device according to any one of claims 1 to 7, further comprising a heat insulation unit, wherein the heat insulation unit covers the closed housing, a gas gap exists between the heat insulation unit and the closed housing, and the optical interface penetrates into the heat insulation unit.

9. The optical communication device according to claim 8, wherein the heat insulation unit has a first vent structure, the closed housing has a second vent structure, and the first vent structure, the second vent structure, and the cavity communicate.

10. The optical communication device according to claim 9, further comprising a dust-proof and water-proof unit, wherein the dust-proof and water-proof unit penetrates into the heat insulation unit and the closed housing, and the first vent structure and the second vent structure are formed on the dust-proof and water-proof unit.

11. The optical communication device according to claim 10, wherein the dust-proof and water-proof unit comprises a dust-proof module, a ventilation pipe, and a water-proof module; and
the first vent structure is formed on one of the dust-proof module and the water-proof module, the second vent structure is formed on the other one of the dust-proof module and the water-proof module, the ventilation pipe is located between the dust-proof module and the water-proof module, and the first vent structure communicates with the second vent structure through the ventilation pipe.

12. The optical communication device according to claim 11, wherein the dust-proof module penetrates into one of the heat insulation unit and the closed housing, the water-proof module penetrates into the other one of the heat insulation unit and the closed housing, and the ventilation pipe is located in the gas gap.

13. The optical communication device according to claim 10, wherein the dust-proof and water-proof unit comprises a dust-proof module, a ventilation pipe, and a water-proof module;
the ventilation pipe is located in the gas gap, the dust-proof module is located in the ventilation pipe, and a third vent structure communicating with the ventilation pipe is formed on the dust-proof module; and
a first end of the ventilation pipe communicates with the water-proof module; and the first vent structure is formed on one of the water-proof module and a second end of the ventilation pipe, and the second vent structure is formed on the other one of the water-proof module and the second end of the ventilation pipe.

14. The optical communication device according to claim 11 or 12, wherein a projection of the dust-proof module on the closed housing coincides with a projection of the water-proof module on the closed housing.

15. The optical communication device according to claim 11 or 12, wherein a projection of the dust-proof module on the closed housing is staggered from a projection of the water-proof module on the closed housing.

16. The optical communication device according to any one of claims 1 to 15, wherein the dispersion unit and the switching unit are disposed on a bottom wall of the closed housing.

17. The optical communication device according to any one of claims 1 to 15, further comprising a support unit, wherein the support unit is disposed in the cavity, and the dispersion unit and the switching unit are disposed on the support unit.

18. The optical communication device according to any one of claims 8 to 15, wherein the heat insulation unit is located outside the closed housing, or the heat insulation unit is located in the cavity.

19. The optical communication device according to any one of claims 1 to 18, wherein the optical interface comprises a plurality of connection optical fibers, the closed housing has a first installation position, and the connection optical fibers penetrate through the first installation position.

20. The optical communication device according to claim 19, further comprising a sealing sleeve, wherein the sealing sleeve is sleeved along a circumferential direction of the connection optical fibers, and the sealing sleeve penetrates through the first installation position.

21. The optical communication device according to claim 20, further comprising an insertion assembly, wherein the insertion connection assembly comprises a mounting part, a first insertion part, and a second insertion part, the mounting part penetrates through the first installation position, and the first insertion part and the second insertion part are removably disposed in the mounting part; and
the connection optical fibers comprise a first part and a second part, the first insertion part is disposed on an end part of one end of the first part, the second insertion part is disposed on an end part of one end of the second part, the first insertion part and the second insertion part cooperate with each other in an insertive connection manner, and the first part and the second part are electrically connected through cooperation between the first insertion part and the second insertion part.

22. The optical communication device according to claim 3, wherein the electrical interface comprises a flexible circuit board, the closed housing has a second installation position, and the flexible circuit board penetrates through the second installation position.

23. The optical communication device according to claim 3, wherein the electrical interface comprises a first flexible circuit board and a second flexible circuit board, the first flexible circuit board is located in the cavity, and the second flexible circuit board is located outside the cavity; and
the electrical interface further comprises an insulating part, the closed housing has a second installation position, the insulating part penetrates through the second installation position, the insulating part has a connection routing, the first flexible circuit board is electrically connected to one end of the connection routing, and the second flexible circuit board is electrically connected to the other end of the connection routing.

24. The optical communication device according to claim 23, wherein the flexible circuit board comprises reinforcing boards and a flexible substrate, and the reinforcing boards are disposed on two opposite sides of the flexible substrate.
